# EUROPEAN PATENT APPLICATION

(11) **EP 1 480 461 A2**
(43) Date of publication of application: **24.11.2004**
(21) Application number: 04252455.3
(22) Date of filing: 28.04.2004
(51) Int. Cl.: H04N 7/173

(54) **System and methods for synchronizing the operation of multiple remote receivers in a broadcast environment**

(30) Priority: 30.04.2003 US 466928 P
(71) Applicant: Ensequence, Inc., Portland, OR 97204 (US)
(72) Inventor: Wallace, Michael W., Vancouver, WA 98683 (US); Westerman, Larry Alan, Portland, OR 97210 (US)
(74) Representative: Nicholls, Michael John

(57) **Abstract**

The system and method stores event data, including timing data associated with each event referenced against a reference time, in an index table within the memory of an integrated receiver decoder (IRD) such as a set-top-box. The event data is typically transmitted in advance of a broadcast signal received by the IRD and stored within IRD memory in anticipation of the broadcast program. The reference time is generated by any one of a variety of different means, such as by time date table, time plus offset table, or within a data (e.g. MPEG) stream. Time relative to the reference time, where the reference time can be periodically reset to accommodate interruptions or changes in the original broadcast programming to which the events are synchronized, are compared to the event times stored in memory. If a match occurs, the event triggers at that appropriate relative time. This event data, alone or in conjunction with additional transmitted triggering data, is compared to a reference timing signal generated by one of several means. This combination of data is then used to control the local execution of the application on each IRD.

## Description

This invention relates to the synchronization of behavior and operation among a group of distant receivers in a broadcast environment.

In contemporary digital broadcast television systems, application data may be broadcast with the video, audio and private data streams. This application data, upon reception by the integrated receiver decoder (IRD) device, can be stored in memory and executed by the IRD-resident software. Such an application might, for example, overlay additional graphical elements or text on the video image displayed on the television screen, prompting the user to employ the television remote control to interact with the application logic.

A typical example of such an interactive application might be a game show application. While the video content displays the announcer presenting a question to the players on the show, the application program might cause the video content to be overlaid with the text of the same question, with multiple possible answers. The user is prompted to select one of the answers, in competition with the players in the show and/or other viewers. Before the correct answer is displayed, the application must block the viewer from making or altering his/her selection; once the answer is displayed, the application must remove the question and answers from the screen in preparation for further questions.

Obviously, synchronization of the operation of the (local) application and the (remote) broadcast is essential to the successful playing of the game. This need is even more evident for betting or gambling applications, where money may be won or lost depending upon the relationship between guesses and actual outcomes.

What is required, therefore, is a method for synchronizing the operation of a central video transmission system, and multiple remote receiver devices. At present, four general methods exist to accomplish this synchronization: Three of these methods operate in the analog broadcast domain, and one in the digital broadcast arena.

In the first method, the application is not actually displayed on the television screen, but is displayed on a companion computer co-located with the television. The computer gathers data from a real-time connection to a server machine, most typically through the HTTP protocol incorporated into Internet Web browsers. The server changes the contents of the HTTP pages it supplies, or otherwise manipulates the operation of the browser, through means of a real-time HTTP protocol link.

In the second method, developed by the Advanced Television Enhancement Forum (ATVEF), data signals incorporated into the analog video signal are received and decoded by the television receiver. The ATVEF standard is incorporated by reference for all purposes herein. Briefly, these data signals are in the form of Uniform Resource Locators (URLs), which direct the television receiver control system to gather data from an HTTP-connected source. Again, this is a Web-based approach to synchronization.

In the third method, developed by Wink, special signals are encoded into the analog video signal, received by an IRD, and interpreted to control the contents of the displayed image. Wink's teachings, posted in the Internet at wink.com, are incorporated herein for all purposes. This system provides a primitive level of synchronization and display.

The fourth method, which is patented by TwoWayTV, utilizes a parallel data stream transmitted simultaneously with the video and audio data. Data packets are encoded in this stream in a proprietary format. The IRD hardware and software extract these data packets and forward their contents to the application code, which utilizes the data packets to resynchronize an internal clock, or to perform other specific display functions. Timing information broadcast just prior to the synchronization point is compared with the internal clock, to generate appropriate events at the desired points. These are more fully disclosed in the following patents whose teachings are incorporated herein for all purposes: US6287199 EP866614, US6515992, EP1003313, EP1005885, and EP1050328.

The techniques which alter the analog signal are designed to avoid any alteration to the visible video content. For this reason, newly-injected signals are confined to the temporal portion of the analog signal which is not displayed on the screen. In the digital domain, the complexity of creating the video, audio and private data streams, and the significance of the absolute and relative data rates of these streams, is such that alteration of these streams is undesirable. Therefore, any adjunct timing data must be distinct from the video/audio/private data streams.

The current invention deals with the problem of executing interactive television applications that are related to, or synchronized with, broadcast video signals.

The current invention differs from prior art by utilizing triggering timing data, which is transmitted prior to the execution of the application and stored in the memory of the integrated receiver decoder (IRD). This data, alone or in conjunction with additional transmitted triggering data, is compared to a timing reference generated by one of several means. This combination of data is then used to control the local execution of the application on each IRD.

The invention will be further described by way of example with reference to the accompanying drawings, in which:-
FIG. 1 is a schematic showing the basic components of a broadcast/synchronization system utilized in a preferred implementation of the invention.
FIG. 2 is a schematic diagram illustrating a multi-group network, with variable delays among groups according to a preferred implementation of the invention.
FIG. 3 is a schematic diagram illustrating feedback control of absolute reference adjustment performed according to the invention.

We present a general analysis of the problem of synchronization of distant receivers, and disclose a variety of methods for solving this problem. In addition, we disclose some additional techniques related to the principal issue of synchronization.

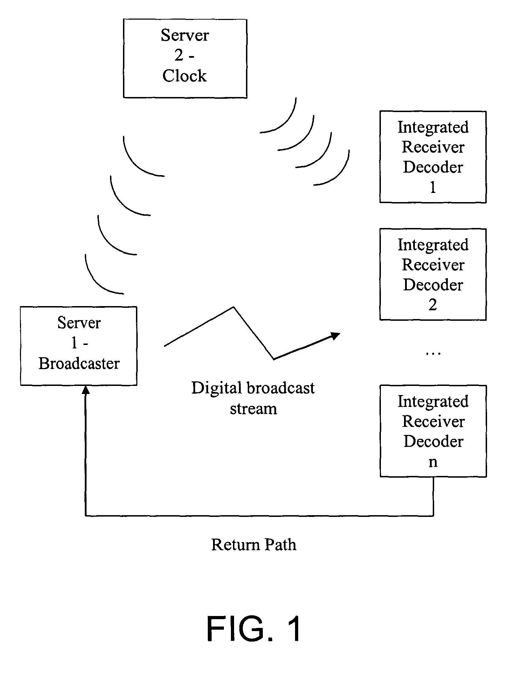

FIG. 1 shows the essential elements of a synchronized system of the type we consider. A central server provides the broadcast television signal, which may be conveyed by terrestrial broadcast, cable, satellite, IP, or other one-to-many transmission technique. The essential feature of Server 1 is that it supplies a multiplicity of IRDs.

Server 2 comprises the source of the absolute timing reference. It may be distinct from Server 1, co-located with Server 1, or combined with Server 1. The timing signal may be derived from the broadcast stream, imposed on the broadcast stream, or independent of the broadcast stream.

Each IRD is capable of receiving the broadcast video/audio/private data stream, and where required is also capable of receiving a synchronization data stream co-broadcast with the video/audio/private data stream, and/or an external timing signal.

In some schemes described below, at least one IRD must be equipped with a real-time return path connection to Server 1, as via over a modem line.

The critical requirement for synchronization, in the context we discuss here, is that the application running on the IRD perform operations at appropriate moments relative to the content of the video displayed on the screen of the connected television set.

In the analog world, Wink solves this problem by incorporating analog instructions in the video signal, which are decoded and executed by the IRD application. The instructions cause the display of simple graphics and/or text on the screen immediately when they are received.

In the digital realm, TwoWayTV solves this problem by transmitting data packets in parallel with the digital video signal, which are decoded and interpreted by the IRD application. In this case, the data may be timing signals used to set an internal clock, or contextual data to be displayed on the television screen, or control data to affect the operation of the application.

Each of these solutions has the feature that the timing information, and the data to control the results of the consequent operation, are both incorporated into the broadcast stream.

Another source for the timing signal might be a distinct Server 2, such as the constellation of GPS satellites which provide navigational and clock information worldwide. These signals could be received both at the Server 1 site and the IRD sites. In this case, the synchronization data would then take the form of time indices, rather than clock events, which could be sent arbitrarily in advance of the exact moment of the synchronization point as is required for the two solutions described above.

An alternative solution is to utilize the external timing signal as a common reference point, then transmit data in the broadcast stream which signals the adjustment required to the common reference to derive a program-relative clock signal. In this case, the application program could utilize a table of program-relative times, transmitted either with the application program or prior to the moment of a given synchronization point and stored in local memory on the IRD. The application program could then compare the stored synchronization time data with the program relative clock, and generate internal synchronization events (as opposed to merely passing through externally-generated synchronization events as above).

Storing synchronization time data in the IRD affords additional methods of generating synchronization events. For example, if the stored data is relative to the timing data encoded in the video stream (for example, GOP time codes or PCR clock values), then the IRD could compare data read from the video stream with anticipated event times, generating events as appropriate.

Another technique using IRD-cached data would be to describe synchronization points as program-relative times, then provide a means for the application to analyze the video stream and periodically determine the program-relative time, in order to adjust a local time reference kept in the IRD (as for example with a timer, or by adjusting the IRD's internal clock). Such a means might be to provide specific key-frame images, with corresponding program-relative times. The application would then continually compare the incoming video with the stored reference frames, and an appropriate match would suffice to synchronize the local clock, which could then be used to generate events based upon the program-relative data table. Another example would be to analyze the contents of audio or private data streams, such as the Teletext data transmitted in Europe, searching for appropriate pre-defined data references.

When the IRD maintains a local reference, the IRD must still receive data from the television server to determine the offset of the local reference from the program reference. Repetitive transmission of this offset value is necessary for viewers who tune into a broadcast after the moment when the program starts, to enable the IRDs used by such viewers to develop an accurate local reference. Currently this is done in the TwoWayTV system by periodically transmitting specific time reference packets.

The rate of transmission of reference data may depend on the characteristics of the network. The reference data may be transmitted regularly or irregularly, and may be interspersed with data, or transmitted alone.

Local reference might be generated by counting frames of video, with Server 1 periodically transmitting, in a private or alternate data channel, the absolute count. The local reference might also be a timer or clock within the IRD. The local reference, as before, is used by comparison to a stored table of synchronization points, generating events which are utilized by the application program.

In some broadcast situations, the broadcast video signals may not be received simultaneously at all IRDs. Some groups of IRDs may receive the signal at grossly different delays than other groups. In this situation, it may be desirable to have all applications display their information overlays simultaneously relative to one another, rather than relative to the underlying video content. This might be true, for example, in a gambling application, where significant delays in one portion of the network could lead to cheating the system.

In these cases, one or more representative IRDs may be utilized to provide real-time feedback to the synchronization server. Data could then be broadcast, specific to each group of IRDs, which would instruct those IRDs how to adjust their internal references relative to the system-provided reference, thus creating a synchronization reference that is more-or-less absolute across the network.

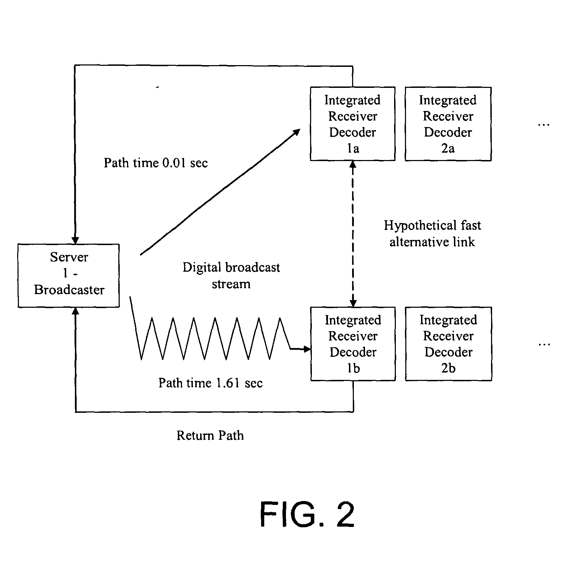

To be more specific, consider the network shown in FIG. 2. In this case, the IRDs exist in two populations, one of which receives broadcast signals with a latency of 0.01 seconds from the server, while the second receives broadcast signals with a latency of 1.61 seconds from the server. If an alternate high-speed connection could be made between the two groups, an advantage could be made of the 'foreknowledge' inherent in the latency difference. In this case, the server would instruct IRDs in the second group to adjust their clocks 1.6 second earlier than nominal and present the application graphical displays accordingly 1.6 seconds ahead of the nominal position in the video content, but in synchrony with the absolute time of presentation of the same application on the first group of IRDs. This technique requires the absolute latency of the return path be negligible, or that the absolute latency of the various return paths be equal, or differ by known amounts which can be factored into the determination of the relative adjustment of the various groups.

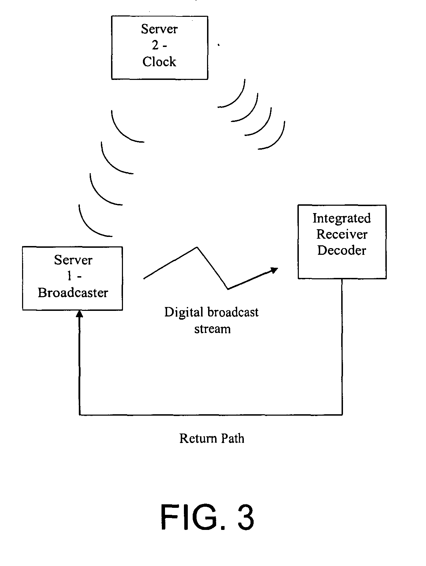

The return path connection from an IRD to the video server could also be used in the situation with a distinct time reference server. This is shown in FIG. 3.

In this case, an external server provides an absolute time reference common to all IRDs. For any one group of IRDs, a representative unit is coupled, via a return path, to the video server, which also receives the absolute time reference. By comparing the directly- and indirectly-received time references, the video server can ascertain the transmission latency, then determine how to instruct the IRDs to adjust their time offset to correspond to the absolute time at the video server. This would be most useful when there are multiple video servers, each serving the same content to a distinct group of IRDs, which must nonetheless be kept in absolute synchrony.

When the system utilizes a server-supplied synchronization signal, the issue arises of how this signal is itself synchronized with the video content. This is critical because the temporal flow of the video stream may be altered during broadcast by the insertion of advertisements or other breaks. Additionally, the actual commencement time of broadcast may be affected by elements outside the server environment, such as distribution delays inherent in getting the signal to the video server itself.

TwoWayTV utilizes a manual method of generating these signals. A human operator views the output of an IRD tuned to the broadcast signal, and when a certain pre-defined event occurs in the video stream, the operator activates a control that causes the appropriate data to be transmitted on the broadcast stream.

Another method for accomplishing this is to perform image or sequence recognition on the broadcast video inside the server, generating synchronization events when appropriate images are detected.

We describe an alternative technique, which involves embedding a special event within the encoded, compressed video stream. The MPEG standard defines the concept of a group-of-pictures (GOP), which is a set of adjacent images that are encoded as a group. Each GOP typically contains 12-15 video frames. Insertion of an atypical GOP, for example, one containing a single frame, could serve as a specific beginning-of-program marker in a video sequence, which could be detected and which could trigger the automatic generation and transmission of a synchronization signal. Such a one-frame GOP would not impact the performance of video decoders in IRDs receiving the signal. Longer alternate patterns could be employed to the same end.

### Example

The following example uses for illustrative purposes content related to an interactive game show. The broadcast content is the trivia game show. The interactive "event data" content is an application which allows a television viewer sitting at home to select from a plurality of displayed answers using a remote control in synchronicity with the time at which a question is asked of the actual studio players within the broadcast content.

The questions of the game show are scripted in advance of taping. Once the tape is edited to fit within a broadcast window (exclusive of commercials), the content provider or some other manual or automated service would review the tape and identify absolute timing portions within the tape at which questions are asked. The reviewer might find, for instance, that the first question with four possible answers to choose from is asked at 00:04:05 into the tape and that the player is given until 00:04:35 in which to respond. An application, or event data, would be written to display the question and the four possible answers and to wait until a signal is received from the home-viewer's remote control indicating a selection of one of the answers. The application would be written to only accept answers within the time period stated - so that a first event having event time 00:04:05 acts to display the questions/answers and place the IRD in a wait state to await a remote control button press, and a second event having event time 00:04:35 acts to remove the question from display on the television screen and ignore "answer" remote control presses. These events and associated event times are collected, indexed, and associated with the base source broadcast content.

The broadcast content may be edited to be 26 minutes long in order to accommodate insertion of commercials and the like, and thereby bring the content up to an even 30 minutes. Accordingly, the time at which the questions are broadcast to the viewer may be different from the source content without commercials. That is, if a set of commercials is inserted before the first question is asked in the example above, the first question may not be asked until 00:6:05 into the broadcast content. Commercials and other inserted events such Emergency Broadcast or Special Reporting events may delay, interrupt or create discontinuities within the original taped source material.

The broadcaster receives the content from the content provider including the base source broadcast content (e.g. the game show edited without commercials), and the index of events and times. The broadcaster, or another entity, would transmit the events and times to IRDs for storage in advance of live broadcast of the program. These events would be stored in a first receiver, such as the IRD of a viewer wanting to play along with the trivia game. The event content is associated with an event application and has an associated event time.

A reference time would be received at each IRD indicating, in a preferred embodiment, a zero time at which a timer within the IRD should start. Each of the events fire based on this reference time. The broadcaster, if inserting commercials or otherwise enabling interruptions within the source material being broadcast, would set back or offset the reference time according to the time of the material added to the original content. For instance, if 2 minutes of commercials is inserted at the beginning of the broadcast, then the reference time would be set back two minutes so that the first event does not fire (e.g. the first question is not displayed on the viewer's television) until after the commercials are over.

Accordingly, the broadcast content is received at the first receiver concurrently with the reference time. The event time and reference time would be compared or otherwise associated to find a match or exceeding a threshold. Upon reaching the timing threshold, the event application would be triggered at the first receiver in response to the determined reference time.

The system would advance stepwise through the events. Accordingly, once the threshold event time for question 1 is reached, then the system looks for the event time trigger for question 2. If the viewer arrives in the middle of the broadcast, then the system can be adapted to trigger the first event having an event time immediately prior the reference time indicated. Accordingly, a viewer coming in during the reading of question 5 would see only question 5 displayed on the screen and not question 1. Advancing stepwise through the index list of events responsive to the step of associated the reference time with the event time enables sequential operation of the event applications on the first receiver in conjunction with the broadcast content.

Having described and illustrated the principles of the invention in a preferred embodiment thereof, it should be apparent that the invention could be modified in arrangement and detail without departing from such principles. While the basis of this invention is the asynchronous transmission of synchronization data for storage and manipulation within the IRD, coupled with the generation of a program-relative timing signal, this technique could be used in conjunction with any of the existing techniques. For example, a base set of synchronization points may be transmitted and stored in the IRD, with supplemental synchronization points generated from data transmitted in real time utilizing any of the techniques described herein. We claim all modifications and variation coming within the scope of the following claims.

## Claims

1. A method for synchronizing stored content with broadcast content, the method comprising:
storing event content in a first receiver, said event content associated with an event application and having an associated event time;
receiving from a source external to the first receiver a reference time;
receiving broadcast content at the first receiver concurrently with receiving the reference time;
associating within the first receiver the reference time with the event time; and
triggering the event application on the first receiver responsive to a determined reference time.

2. The method of claim 1, further including the step of storing an index list comprising a plurality of event times associated with a plurality of event applications and advancing stepwise through the index list responsive to the step of associating the reference time with the event time to enable sequential operation of the event applications on the first receiver in conjunction with the broadcast content.

3. The method of claim 1, further including the step of receiving event content for storage in the first receiver in a first data stream in advance of receiving broadcast content contained in a second data stream, where the first data stream is different from the second.

4. The method of claim 1, further including the step of receiving event content for storage in the first receiver in a first data stream concurrent with receiving broadcast content in a second data stream, where the first data stream is different from the second data stream.

5. The method of claim 1, 2, 3 or 4 wherein the event times are listed as a value from a zero reference time point, the method further including the step of changing the zero reference time point over a course of a broadcast to accommodate discontinuities in the broadcast content from an original broadcast content source.

6. The method of claim 5, wherein the discontinuities result from commercials inserted within the original broadcast content source.

7. The method of any one of the preceding claims, wherein the reference time is received from an external source derived from a data stream independent from the broadcast content.

8. The method of claim 7, wherein the external source is a GPS satellite system.

9. The method of claim 7, wherein the external source is a coupled to the first receiver over a modem line.

10. The method of claim 1, wherein the reference time is derived from a data stream including the broadcast content.

11. The method of claim 10, further including the steps of:
storing reference frames at the first receiver; and
comparing image frames of the broadcast content data with the reference frames to synchronize a local clock at the first receiver.

12. The method of claim 10, further including the steps of:
receiving the broadcast content at a second receiver; and
generating a reference time of receipt of the broadcast content at the second receiver and using the generated reference time to create a reference time for the first receiver.

13. The method of any one of the preceding claims, wherein the first receiver is a set top box.

14. A set top box adapted to receive broadcast content via a broadcast signal and a reference time signal and comprising:
a memory within the set top box;
an index list stored within the set top box memory and queried by the set top box responsive to the reference time signal, said index list including event triggers indexed with the program content and stored with the set top box memory, and event times indexed to a reference time at which the events are set to trigger; and
means for triggering the events responsive to the reference time.

15. A method for synchronizing displayable data with a broadcast event in real time, comprising the steps of:
receiving from an external source a reference time; and
activating data events at an appropriate reference time within the broadcast event.
